# EUROPÄISCHE PATENTSCHRIFT

(11) **EP 0 705 125 B1**
(45) Veröffentlichungstag und Bekanntmachung des Hinweises auf die Patenterteilung: **10.09.1997**
(21) Anmeldenummer: 94920956.3
(22) Anmeldetag: 18.06.1994
(51) Int. Cl.: B01D 1/18, A23C 1/04, A23F 5/34

(54) **TROCKNUNG VON WASSERHALTIGEN WERTSTOFFEN ODER WERTSTOFFGEMISCHEN MIT ÜBERHITZTEM WASSERDAMPF**
DRYING WATER-CONTAINING VALUABLE SUBSTANCES OR MIXTURES THEREOF WITH SUPERHEATED STEAM
SECHAGE DE MATIERES DE VALEUR OU DE MELANGES DE MATIERES DE VALEUR A L'AIDE DE VAPEUR D'EAU SURCHAUFFEE

(30) Priorität: 26.06.1993 DE 4321361
(43) Veröffentlichungstag der Anmeldung: 10.04.1996
(73) Patentinhaber: Henkel Kommanditgesellschaft auf Aktien, 40191 Düsseldorf (DE)
(72) Erfinder: RÄHSE, Wilfried, D-40589 Düsseldorf (DE); EFFEY, Gunter, D-40789 Monheim (DE); BECK, Wilhelm, D-40595 Düsseldorf (DE)
(86) Internationale Anmeldenummer: EP9401987
(87) Internationale Veröffentlichungsnummer: WO9500222

(56) Entgegenhaltungen:
- WO-A-92/05849
- FR-A- 2 009 857
- US-A- 2 911 036

## Beschreibung

Die Erfindung betrifft ein Verfahren zum Trocknen von wasserhaltigen Wertstoffen oder Wertstoffgemischen insbesondere mit erhöhter Temperaturempfindlichkeit, vorzugsweise mit einer Eignung als Netz-, Wasch- und/oder Reinigungsmittel oder zur Verwendung in solchen Mitteln, in einem senkrecht stehenden Turm unter Einsatz von überhitztem, im Kreislauf und im Gegenstrom zum fallenden Trocknungsgut gefahrenen Wasserdampf als Trocknungsgas.

Die Trocknung von wässrigen Zubereitungen von Wertstoffen und Wertstoffgemischen, die als Netz-, Wasch- und/oder Reinigungsmittel geeignet sind, mit überhitztem Wasserdampf als Heißgasstrom ist aus der internationalen Patentanmeldung W092/5849 des Anmelders bekannt. Die damit verbundenen Vorteile gegenüber der üblichen Sprühtrocknung mit Heißluft als Trockengas liegen zum einen in der Abwesenheit von Sauerstoff, so daß die Probleme bei der Auftrockung rein oder weitgehend organischer Wertstoffe, beispielsweise entsprechender Tenside auf Naturstoffbasis, z. B. oxidative Schädigungen oder Brandgefahren vermieden werden. Die Kreislaufführung des Trocknungsgases ermöglicht eine praktisch abgaslose Fahrweise. Weitere Vorteile, die unter anderem auch durch die grundsätzlichen Unterschiede des Trocknungsgases bedingt sind, finden sich in der angegebenen Veröffentlichung.

Die Kreislaufführung des Trocknungsgases mit dem Ziel einer abgasfreien Verfahrensführung bedingt eine geschlossene Anlage. Ein Zutritt von Falschluft bei der üblichen Zerstäubungstrocknung mit Heißluft oder heißen Verbrennungsgasen als Trocknungsgas wäre hier nicht möglich oder zumindest unzweckmäßig. Die geschlossene Bauweise der mit überhitztem Wasserdampf arbeitenden Trocknungsanlage führt daher zu einem unterhalb der untersten Heißdampfeinlässe liegenden, nahezu strömungsfreien Raum, dessen Temperatur etwa der Einlaßtemperatur des Heißdampfes entspricht. Auch die Wände in dem unteren Bereich des Trocknungsbehälters weisen diese Temperatur auf, wenn nicht besondere Vorkehrungen getroffen werden.

Eine Vielzahl von Trocknungsgütern, insbesondere organische Produkte, haben nach der Trocknung klebrige Eigenschaften oder durchlaufen zumindest während des Trocknungsvorganges eine adhäsive Phase. Die vollständig oder teilweise aufgetrockneten Partikel backen daher in dem relativ strömungsarmen, unterhalb der Heißdampfeinlässe gelegenen Raum zum einen aneinander und zum anderen an der Innenwand des Gehäuses an. Dieser Effekt wird durch die relativ hohe Verweilzeit der Partikel in diesem Raum verstärkt. Eine thermische Schädigung der an der heißen Gehäusewand anklebenden Partikel ist nicht zu vermeiden.

Das Problem wird bei der üblichen Heißluft als Trocknungsgas verwendenden Sprühtrocknung mit einem schnellen Austrag des Produktes durch einen ständig geöffneten Kanal am unteren Ende des Trocknungsbehälters gelöst. Diese Abhilfemöglichkeit ist bei der Trocknung mit im Kreislauf gefahrenem Trocknungsgas, bei dem praktisch abgasfrei gearbeitet wird, verwehrt.

Die Problematik der Anbackungen thermoplastischer Stoffe und zuckerhaltiger Lebensmittel an den Gehäusewänden von Sprühtrocknern ist aus dem Stand der Technik bekannt (K. Kröll, Trocknungstechnik, 2. Band, Trockner und Trocknungsverfahren, 2. Auflage 1978, Springer Verlag, S. 294). Diese Stoffe bleiben gegen Trocknungsende noch bei mäßig hohen Temperaturen weich und klebrig. Zur Lösung dieses Problemes versieht man die Hände der Trockner für solche Güter mit luftdurchströmten Mänteln, oder man läßt innen Blasräumer umlaufen, die das Pulver mit Kaltluft abblasen. Es ist auch bekannt, daß man einen kühlen und entfeuchteten Luftstrom so in den Trockner führen kann, daß er als ein abwärts gerichteter Kaltluftschleier innen an den Wänden entlang streicht. Die Zufuhr von Kaltluft oder eines Kaltluftschleiers wird insbesondere für den üblicherweise konusförmigen Auslauftrichter am unteren Ende des zylinderförmigen Trocknungsturms vorgenommen. Die Kaltluft wird über einen im Ansatzbereich des Konus angeordneten Ringkanal und eine Luftverteilplatte in den Innenraum eines Doppelmantels geleitet, dessen Innenwand unterhalb des Einlasses etwa in einer Höhe endet, in der Innen- und Außenwand sich sehr nahe kommen. Die Kaltluft strömt durch den engen ringförmigen Spalt und wird durch diese Anordnung zu einer tangential an der Innenwand des Konus geführten Strömung gezwungen.

Ein anderes Beispiel für das Einblasen von Kaltluft in den Austragskonus einer Sprühtrocknungsanlage findet sich bei K. Kröll, Trocknungstechnik, 3. Band, Trocknen und Trockner in der Produktion, von W. Kast u. a., Springer Verlag 1989, S. 188, Bild 3.20. In diesem Sprühturm wird Kaffee-Extrakt getrocknet. Auch hier wird die Kaltluft über einen Ringkanal dem Konus zugegeben. Näheres zu der Kaltlufteinspeisung ist dem Dokument aber nicht zu entnehmen.

Das Einblasen von Kaltluft, sogar wenn man eine tangentiale Strömungsführung entlang der Innenwand des Konus vorsieht, reicht bei den üblichen, mit Heißluft als Trocknungsmedium betriebenen Zerstäubungstrocknern aus. Man arbeitet üblicherweise mit einem offenen Austragskonus und, insbesondere bei der Zerstäubungstrocknung von Waschmitteln und Waschmittelinhaltsstoffen, mit leichtem Unterdruck, damit Staubemissionen nach außen vermieden werden. Die dadurch in den Trocknungsturm von unten her einströmende Falschluft führt zu einer Verwirbelung, die zu hohe Temperaturen im unteren Bereich des Zerstäubungstrockners nicht entstehen läßt. Der unten offene Austragskonus ermöglicht außerdem ein schnelles Ausbringen des getrockneten Produktes, so daß dessen Verweilzeiten im unteren Turmbereich gering sind.

Unter diesen Voraussetzungen reicht die genannte Einspeisung von Kaltluft in den Austragskonus aus, um Anbackungen von weichen und klebrigen Produkten an den Wänden soweit zu verringern, daß keine unzumutbaren thermischen Schädigungen des Produktes auftreten. Im Fall der Trocknung mit überhitztem Wasserdampf bei leichtem Überdruck unter Kreislaufführung des Dampfes genügen die bekannten Maßnahmen jedoch nicht der Forderung, eine substantielle Gefährdung des Trocknungsgutes auszuschließen. Maßgeblich sind hier die hohen Qualitätsstandards, insbesondere bei der Lebensmittel- und der Waschmittelherstellung.

Die Aufgabe der Erfindung liegt daher bei einem Trocknungsverfahren unter Einsatz von überhitztem, im Kreislauf gefahrenen Wasserdampf als Trocknungsgas darin, Anbackungen des Produkts an der Gehäuseinnenwand mit einer zu langen Verweilzeit zu verhindern, so daß thermische Schädigungen des Produkts nicht auftreten.

Erfindungsgemäß wird diese Aufgabe dadurch gelöst, daß man
a) in den unterhalb des untersten Heißdampfeinlasses liegenden Bereich des Trocknungsturms einen feinverteilten Wassernebel oder gekühlten Wasserdampf mit hoher relativer Feuchte als Hilfsfluid einspeist, dessen Temperatur unterhalb der Eintrittstemperatur des Heißdampfes liegt,
b) das Hilfsfluid über einen Doppelmantel mit durchlässiger Innenwand einströmen läßt und
c) die Strömung tangential zur Innenwand führt.

Die Auswahl von feinverteiltem Wassernebel oder Wasserdampf als Kühl- und Reinigungsmedium für den unteren Bereich des Trocknungsturms und die Gehäusewände vermeidet eine Verunreinigung der Wasserdampfatmosphäre in dem geschlossenen Kreislaufsystem. Der durch den Doppelmantel strömende Wasserdampf oder Wassernebel kühlt zunächst die Innenwand im Austragsbereich des Trocknungsturms, bevor das Kühlfluid in das Innere des Turms einströmt. Die dann erfolgte tangentiale Strömung verhindert Anbackungen des klebrigen Trocknungsgutes oder vermindert diese zumindest. Besonders günstig ist es jedoch, wenn das Hilfsfluid intermittierend, also pulsierend zuströmt. Schon vorhandene Anbackungen werden durch die Strahlstoßkraft des tangential zur Innenwand strömenden Wasserdampfes oder Wassernebels freigeblasen. Die mit steigender Strömungsgeschwindigkeit stark anwachsende Strahlstoßkraft des Hilfsfluides ermöglicht es, auch fest sitzende Anbackungen abzulösen, die ein kontinuierlich strömender Wasserdampf nicht entfernen kann. Die Strömungsgeschwindigkeit, die maßgeblich die Strahlstoßkraft des Hilfsfluids bestimmt, sowie die Impulsfrequenz kann in Abhängigkeit vom Trocknungsgut und den sonstigen Verfahrensbedingungen eingestellt werden.

Die Temperatur des eingespeisten Wassernebels oder Wasserdampfs wird vorzugsweise in Abhängigkeit der Art und Stärke der Anbackungen gewählt.

In einer bevorzugten Ausführungsform der Erfindung läßt man das Hilfsfluid durch eine Vielzahl von Schlitzen in der Innenwand des Doppelmantels einströmen, die durch ein schuppenartiges Überlappen von Segmenten der Innenwand gebildet sind.

Das in das untere Austragsende des Trocknungsturms eingeblasene Hilfsfluid soll in der Regel nicht zu einer weiteren Auftrocknung der Produktpartikel führen. Eine zu starke Überhitzung des eingespeisten Wasserdampfes ist daher zu vermeiden. Das Hilfsfluid Wasserdampf sollte daher eine entsprechend hohe relative Feuchte haben.

Das Hilfsfluid, also Wassernebel oder Wasserdampf kann auf unterschiedliche Weise zur Verwendung in der Trocknungsanlage bereitgestellt werden. Bevorzugt ist jedoch, daß das Hilfsfluid gekühlter Wasserdampf ist und dem Wasserdampf-Kreislaufstrom entnommen wird. Der Wasserdampf kann z. B. aus dem externen Kreislaufstrom zwischen dem Kondensator und dem Erhitzer abgezweigt werden.

In einer besonderen Ausführungsform kann erfindungsgemäß eine zusätzliche Kühlung des unteren Turmbereichs und/oder des darin befindlichen Trockengutes vorgenommen werden. In dieser Ausführungsform wird feinverteilter Wassernebel oder gekühlter Wasserdampf als Kühl- und Reinigungsmedium für den unteren Bereich des Trocknungsturmes, nämlich für den Raum zwischen den untersten Dampfeinlässen und dem Turmboden, und für die Gehäusewände mitverwendet. Die Einführung dieser Hilfsmittel kann beispielsweise über das gekühlte Hilfsfluid, aber auch unabhängig hiervon erfolgen. Durch Einsatz des zusätzlichen Kühlmittels gelingt die verstärkte und sehr rasche Abkühlung des Gehäuses und/oder des Trockengutes wenigstens in seinen Außenbereichen in sehr kurzer Zeit, ohne daß damit eine Erhöhung der Klebrigkeit oder des Wassergehaltes des Trockengutes verbunden sein müßte. Auch die Gesamtbilanz des Trocknungsverfahrens wird durch solche geringen, in den geschlossenen Gaskreislauf eingetragenen Wassermengen nicht gestört. Der eingetragene Wasser- beziehungsweise Kühldampfanteil kann über die Kondensationsstufe des Kreislaufes des Trocknungsdampfes ausgetragen werden.

Bevorzugt ist bei Verwendung von gekühltem Wasserdampf ein Temperaturbereich von 100 bis 150 °C und insbesondere von 110 bis 120 °C. Der Wasserdampf kann eine beliebige Herkunft haben, vorteilhaft ist jedoch die Entnahme aus dem äußeren Teil des Dampfkreislaufs vor der Erhitzerstufe.

Zur Aufrechterhaltung eines gewünschten niedrigen Temperaturbereichs ist es günstig, wenn man die Einspeisung von Wasser und/oder abgekühlten Wasserdampf in Abhängigkeit von der Temperatur im unteren Turmbereich vornimmt und insbesondere auf eine bestimmte Temperatur oder einen bestimmten Temperaturbereich regelt. In einer weiteren vorteilhaften Ausführungsform führt man das Kühlmedium (Wasser und/oder Dampf) über einen in einer bestimmten Höhe um den Turmkonus angeordneten Düsenkranz mit mehreren gleichmäßig verteilten Düsen zu, um eine gleichmäßige Kühlung über den Konusquerschnitt zu erzielen. Besonders zweckmäßig ist es, wenn man das Kühlmedium über mehrere in unterschiedlicher Höhe angebrachte Düsenkränze einspeist, um eine gleichmäßige Kühlung sowohl über den Querschnitt als auch über die Höhe des unteren Turmbereichs, des Konus, zu erreichen.

Wenn die Erfindungsschilderung bisher auch im wesentlichen an der Sprühtrocknung erfolgt ist, so ist die Lehre des erfindungsgemäßen Handelns hierauf nicht eingeschränkt. Andere Trocknungsverfahren, die mit dem Prinzip des strömenden gasförmigen Trocknungsmediums arbeiten, können von der erfindungsgemäßen Lehre ebenfalls mit Vorteil Gebrauch machen. So kann beispielsweise die Trocknung in der Wirbelschicht oder die entsprechende Trocknung an einem ruhenden und/oder bewegten stückigen Naßgut durchgeführt werden.

Die Erfindung betrifft die Anwendung des erfindungsgemäßen Prinzips zur Trocknung praktisch beliebiger Wertstoffe und/oder Wertstoffgemische. Wichtig ist allgemein die Anwendung des erfindungsgemäßen Verfahrens unter Einsatz eines inerten Heißgasstromes zur abgasfreien beziehungsweise abgaskontrollierten Trocknung von staubexplosionsgefährdeten und/oder toxischen und/oder Lösungsmittelanteile enthaltenden beziehungsweise zum Pluming neigenden Einsatzmaterialien, insbesondere aus dem Bereich der Netz-, Wasch- und Reinigungsmittel beziehungsweise ihrer Inhaltsstoffe, der Fungizide, der Herbizide und Insektizide und/oder pharmazeutischer beziehungsweise kosmetischer Hilfs- und Wertstoffe.

Die Ausbildung in der Form der Sprühtrocknung als alleiniger Trocknungsschritt oder als Arbeitsstufe in mehrstufigen Trocknungsverfahren hat insbesondere Bedeutung bei der Gewinnung von Nahrungsmitteln einschließlich Molkereiprodukten, Kosmetika und Hilfsstoffen für diese Einsatzgebiete.

Als spezielle Beispiele für das Gebiet der Nahrungsmittel- und Molkereiindustrie seien genannt: die Herstellung von getrockneten Materialien in Pulver- oder Agglomeratform aus den Bereichen Milch, Kindernährmittel, Käse/Molkenprodukte, coffee-whiteners, Eier, Tomaten, Gewürze/Kräuterextrakte, Suppenmischungen, Kaffee/Kaffee-Ersatz, Kokusnußmilch, Aromen, Nahrungsmittel auf Sojabasis.

Als Beispiele für Produkte der pharmazeutischen Industrie seien genannt: Schmerzmittel, Antibiotika, Enzyme, Plasma/Plasmaersatz, Impfstoffe, Vitamine, Hefen. Beispiele für Trockenprodukte der chemischen Industrie aus gängigen Verfahren der hier betroffenen generischen Art sind neben Netz-, Wasch- und Reinigungsmittel und ihren Inhaltsstoffen beispielsweise Katalysatoren, Farbstoffe/Pigmente, Gerbstoffe, organische und anorganische Feinchemikalien, Fungizide, Herbizide, Insektizide, Düngemittel und dergleichen. Aus dem Bereich der keramischen Industrie seien genannt: Carbide, Ferrite, Nitride, Oxide, Silikate, Steatite und Titanate. Auch Polymerchemikalien wie Harnstoff- und Melaminformaldehydharze, PVC, PMMA und dergleichen sind Beispiele für den Einsatz der erfindungsgemäßen Lehre.

## Patentansprüche

1. Verfahren zum Trocknen von wasserhaltigen Wertstoffen oder Wertstoffgemischen insbesondere mit erhöhter Temperaturempfindlichkeit. vorzugsweise mit einer Eignung als Netz-, Wasch- und/oder Reinigungsmittel oder zur Verwendung in solchen Mitteln, in einem seinkrecht stehenden Turm unter Einsatz von überhitztem, im Kreislauf und im Gegenstrom zum fallenden Trocknungsgut gefahrenen Wasserdampf als Trocknungsgas. dadurch gekennzeichnet, daß man
a) in den unterhalb des untersten Heißdampfeinlasses liegenden Bereich des Trocknungsturms einen fein verteilten Wassernebel oder gekühlten Wasserdampf mit hoher relativer Feuchte als Hilfsfluid einspeist, dessen Temperatur unterhalb der Eintrittstemperatur des Heißdampfes liegt,
b) das Hilfsfluid über einen Doppelmantel mit durchlässiger Innenwand einströmen läßt und
c) die Strömung tangential und/oder radial zur Innenwand führt.

2. Verfahren nach Anspruch 1, dadurch gekennzeichnet, daß man das Hilfsfluid intermittierend zuströmen läßt.

3. Verfahren nach Anspruch 1 oder 2, dadurch gekennzeichnet, daß man das Hilfsfluid durch eine Vielzahl von Schlitzen in der Innenwand des Doppelmantels einströmen läßt, die durch ein schuppenartiges Überlappen von Segmenten der Innenwand gebildet sind.

4. Verfahren nach einem der Ansprüche 1 bis 3, dadurch gekennzeichnet, daß das Hilfsfluid dem Wasserdampf-Kreislaufstrom entnommen wird.

5. Verfahren nach einem der Ansprüche 1 bis 4, dadurch gekennzeichnet, daß man zur zusätzlichen Kühlung des unteren Turmbereichs in den zwischen den untersten Dampfeinlässen und dem Turmboden liegenden Raum Wasser, bevorzugt in feinversprühter und/oder vernebelter Form, diskontinuierlich oder kontinuierlich einsprüht.

6. Verfahren nach Anspruch 5, dadurch gekennzeichnet, daß man an Stelle von oder gleichzeitig mit Wasser abgekühlten, leicht überhitztem Wasserdampf erhöhter relativer Feuchte mit einer bevorzugten Temperatur von 100 bis 150°C, insbesondere 110 bis 120°C in den unteren Bereich einspeist .

7. Verfahren nach Anspruch 6, dadurch gekennzeichnet, daß man den abgekühlten, leicht überhitzten Wasserdampf dem äußeren Teil des Dampf-Kreislaufs vor der Erhitzerstufe entnimmt.

8. Verfahren nach einem der Ansprüche 5 bis 7, dadurch gekennzeichnet, daß man die Einspeisung von Wasser und/oder abgekühlten Wasserdampf in Abhängigkeit von der Temperatur im unteren Turmbereich vornimmt.

9. Verfahren nach Anspruch 8, dadurch gekennzeichnet, daß man auf eine bestimmte Temperatur oder einen bestimmten Temperaturbereich regelt.

10. Verfahren nach den Ansprüchen 5 bis 9, dadurch gekennzeichnet, daß man das Kühlmedium, nämlich Wasser und/oder Dampf, über einen in einer bestimmten Höhe um den Turmkonus angeordneten Düsenkranz mit mehreren gleichmäßig verteilten Düsen zuführt, um eine gleichmäßige Kühlung über den Konusquerschnitt zu erzielen.

11. Verfahren nach Anspruch 10, dadurch gekennzeichnet, daß man das Kühlmedium über mehrere in unterschiedlicher Höhe angebrachte Düsenkränze einspeist, um eine gleichmäßige Kühlung sowohl über den Querschnitt als auch über die Höhe des unteren Turmbereichs zu erreichen.

12. Verfahren nach einem der Ansprüche 1 bis 11, dadurch gekennzeichnet, daß wasserhaltige Produkte der chemischen, der kosmetischen und/oder der pharmazeutischen Industrie oder solche der Nahrungsmittel- und Molkereiindustrie getrocknet und dabei insbesondere in Pulver- oder Agglomeratform oder in fließfähige Konzentratform überführt werden.

13. Anwendung des Verfahren nach einem der Ansprüche 1 bis 12 unter Einsatz eines inerten Heißgasstromes zur abgasfreien beziehungsweise abgaskontrollierten Trocknung von staubexplosionsgefährdeten und/oder toxischen und/oder Lösungsmittelanteile enthaltenden beziehungsweise zum Pluming neigenden Einsatzmaterialien, insbesondere aus dem Bereich Netz-, Wasch- und Reinigungmittel beziehungsweise ihrer Inhaltsstoffe, der Fungizide, Herbizide und Insektizide und/oder kosmetischer oder pharmazeutischer Hilfs- und Wertstoffe.

14. Anwendung des Verfahrens nach einem der Ansprüche 1 bis 12 in der Form der Sprühtrocknung als Arbeitsstufe in mehrstufigen Trocknungsverfahren, insbesondere bei der Gewinnung von Nahrungsmitteln einschließlich Molkereiprodukten, Kosmetika und Hilfsstoffen für diese Einsatzgebiete.

## Claims

1. A process for drying water-containing useful materials or mixtures thereof, more particularly with high sensitivity to heat and preferably with a suitability as - or for use in - wetting agents, detergents and/or cleaning products, in a vertical tower using superheated steam circulating in countercurrent to the descending material to be dried as the drying gas, characterized in that
a) a fine water mist or cooled steam with high relative humidity and with a temperature below the entry temperature of the superheated steam is introduced as auxiliary fluid into that part of the drying tower which is situated beneath the lowermost superheated steam inlet,
b) the auxiliary fluid is allowed to flow through a double jacket with a permeable inner wall and
c) the flow is guided tangentially and/or radially to the inner wall.

2. A process as claimed in claim 1, characterized in that the auxiliary fluid flows in intermittently.

3. A process as claimed in claim 1 or 2, characterized in that the auxiliary fluid flows in through a number of slots in the inner wall of the double jacket which are formed by a scale-like overlapping of segments of the inner wall.

4. A process as claimed in any of claims 1 to 3, characterized in that the auxiliary fluid is taken from the steam circuit.

5. A process as claimed in any of claims 1 to 4, characterized in that water, preferably in finely sprayed and/or mist-like form, is sprayed in continuously or discontinuously for additionally cooling the lower part of the tower in the space situated between the lowermost steam inlets and the bottom of the tower.

6. A process as claimed in claim 5, characterized in that cooled, lightly superheated steam with high relative humidity and with a temperature of preferably 100 to 150°C and, more particularly, 110 to 120°C is introduced into the lower part of the tower instead of or together with water.

7. A process as claimed in claim 6, characterized in that the cooled, lightly superheated steam is taken from the outer part of the steam circuit before the heater stage.

8. A process as claimed in any of claims 5 to 7, characterized in that water and/or cooled steam is introduced in dependence upon the temperature prevailing in the lower part of the tower.

9. A process as claimed in claim 8, characterized in that a certain temperature or a certain temperature range is established.

10. A process as claimed in claims 5 to 9, characterized in that the cooling medium, namely water and/or steam, is introduced through a ring of nozzles arranged at regular intervals around the cone of the tower at a certain height thereof in order to obtain uniform cooling over the cross-section of the cone.

11. A process as claimed in claim 10, characterized in that the cooling medium is introduced through several nozzle rings arranged at different heights to obtain uniform cooling both over the cross-section and over the height of the lower part of the tower.

12. A process as claimed in any of claims 1 to 11, characterized in that water-containing products of the chemical, cosmetic and/or pharmaceutical industries or water-containing products of the food and dairy industry are dried and, in particular, are converted into powder form or agglomerate form or into a flowable concentrate form.

13. The use of the process claimed in any of claims 1 to 12 using an inert hot gas stream for the exhaust-free or exhaust-controlled drying of materials vulnerable to dust explosions and/or toxic materials and/or materials containing solvents and/or materials with a tendency towards pluming, more particularly from the field of wetting agents, detergents and cleaning products or ingredients thereof, fungicides, herbicides and insecticides and/or pharmaceutical or cosmetic auxiliaries and useful materials.

14. The use of the process claimed in any of claims 1 to 12 in the form of spray drying as a stage of multistage drying processes, particularly in the production of foods, including dairy products, cosmetics and auxiliaries for these applications.

## Revendications

1. Procédé de séchage de matières de valeur aqueuses ou de mélanges de celles-ci, en particulier à sensibilité accrue à la température, de préférence possédant une aptitude comme agent mouillant lavant et/ou nettoyant, ou destinées à l'utilisation dans des agents de cette espèce, dans une tour en position verticale, en utilisant de la vapeur d'eau surchauffée, acheminée comme gaz de séchage en circuit et à contre-courant au produit de séchage tombant, caractérisé en ce que l'on
a) injecte dans la zone située au-dessous de l'entrée de vapeur d'eau inférieure de la tour de séchage un brouillard d'eau finement divisé ou de la vapeur d'eau refroidie avec une humidité relative élevée, comme fluide adjuvant, dont la température est inférieure à la température d'entrée de la vapeur chaude,
b) laisse le fluide adjuvant s'écouler va une double enveloppe à paroi interne perméable et
c) guide l'écoulement de manière tangentielle et/ou radiale par rapport à la paroi interne.

2. Procédé selon la revendication 1, caractérisé en ce que l'on fait s'écouler le fluide adjuvant de manière intermittente.

3. Procédé selon la revendication 1 ou 2, caractérisé en ce que l'on fait s'écouler le fluide adjuvant par une multitude de fentes dans la paroi interne de la double enveloppe, qui sont formées par un chevauchement en écailles des segments de la paroi interne.

4. Procédé selon une des revendications 1 à 3, caractérisé en ce que le fluide adjuvant est prélevé du circuit de vapeur d'eau.

5. Procédé selon une des revendications 1 à 4, caractérisé en ce que pour obtenir un refroidissement supplémentaire de la zone inférieure de la tour, on injecte de l'eau, de préférence sous forme finement pulvérisée et/ou vaporisée, de manière discontinue ou continue, dans l'espace situé entre les entrées de vapeur inférieures et le fond de la tour.

6. Procédé selon la revendication 5, caractérisé en ce que l'on injecte dans la zone inférieure, à la place de l'eau ou simultanément avec celle-ci, de la vapeur d'eau légèrement surchauffée refroidie avec une humidité relative accrue et une température préférée de 100 à 150 °C, en particulier de 110 à 120 °C.

7. Procédé selon la revendication 6, caractérisé en ce que l'on prélève la vapeur d'eau légèrement surchauffée refroidie dans la partie externe du circuit avant l'étape de réchauffage.

8. Procédé selon une des revendications 5 à 7, caractérisé en ce que l'on procède à l'injection de l'eau et/ou de la vapeur d'eau refroidie, en fonction de la température de la zone inférieure de la tour.

9. Procédé selon la revendication 8, caractérisé en ce que l'on ajuste une température ou une plage de températures déterminée.

10. Procédé selon les revendications 5 à 9, caractérisé en ce que l'on achemine le milieu réfrigérant, c'est-à-dire l'eau et/ou la vapeur va une couronne de busettes comportant plusieurs busettes réparties de manière uniforme, aménagée à une hauteur déterminée autour du cône de la tour, afin d'obtenir un refroidissement homogène sur la section transversale du cône.

11. Procédé selon la revendication 10, caractérisé en ce que l'on injecte le milieu réfrigérant va plusieurs couronnes de busettes aménagées à différentes hauteurs, afin d'obtenir un refroidissement uniforme aussi bien au-dessus de la section qu'au niveau de la zone inférieure de la tour.

12. Procédé selon une des revendications 1 à 11, caractérisé en ce que des produits aqueux de l'industrie chimique, cosmétique et/ou pharmaceutique ou de l'industrie alimentaire et laitière sont séchés et transformés, en particulier, sous forme de poudre ou d'aggloméré ou sous forme concentrée coulante.

13. Application du procédé selon une des revendications 1 à 12, en utilisant un flux de gaz chauds inertes pour le séchage exempt de gaz d'échappement ou à gaz d'échappement contrôlés des matières d'utilisation menacées de coups de poussières et/ou toxiques et/ou contenant des fractions de solvants ou ayant tendance au "pluming", faisant partie en particulier du domaine des produits mouillants, lavants et nettoyants ou de leurs ingrédients, des fongicides, des herbicides et des insecticides et/ou des matières adjuvantes et de valeur cosmétiques ou pharmaceutiques.

14. Application du procédé selon une des revendications 1 à 12, sous la forme de séchage par pulvérisation comme phase de travail dans des procédés de séchage à plusieurs étapes, en particulier, dans la production des aliments dont les produits laitiers, les cosmétiques et les adjuvants pour ces domaines d'utilisation.
